# EUROPEAN PATENT APPLICATION

(11) **EP 4 335 607 A1**
(43) Date of publication of application: **13.03.2024**
(21) Application number: 23173034.2
(22) Date of filing: 12.05.2023
(51) Int. Cl.: B29C 45/14, B29C 45/00, B29C 63/00, B29C 63/02, B44C 1/22, B29L 9/00

(54) **METHOD OF FABRICATING LIGHT-TRANSMITTING DECORATED MOLDING ARTICLE**

(30) Priority: 30.08.2022 TW 111132672; 05.10.2022 TW 111137796
(71) Applicant: Jin Ya Dian Technology Co., Ltd., Taoyuan City 326 (TW)
(72) Inventor: YU, Che-Ming, 238671 New Taipei City (TW); YING, Kuo-Liang, 320 Taoyuan City (TW)
(74) Representative: Becker, Eberhard

(57) **Abstract**

A method of manufacturing a decorated molding article includes: forming an all-in-one coating on a substrate and performing a curing step, thereby forming a composite layer structure with a protective effect, a color effect, and a bonding effect. Compared with the printing layer in the conventional In Mold Label (IML) and InSert molding (INS) that is made by a plurality of anti-impact and bonding processes, the composite layer structure of the embodiment can form a molded film with better physical properties (e.g., higher hardness, better protection effect, etc.) after the blister molding process. Therefore, the molded film of the embodiment can be applied to a laser engraving process to form a variety of light-transmitting decorative molded products. Further, the present disclosure further forms a protective layer locally in the grooves formed after the laser engraving process, so as to protect the texture after the laser engraving process from damage.

## Description

### BACKGROUND

### Technology Field

The disclosure relates to a method of fabricating a light-transmitting decorated molding article.

### Description of Related Art

Generally speaking, decorations such as patterns or texts formed on the surface of an object shell are mainly formed through a spraying or printing process in order to present a specific visual effect and increase the variety of the appearance of the object. A conventional forming method is to spray a hardened layer on the surface of the shell after the shell of the related product is completed. This method has a cumbersome process, poor yield, and may cause organic solvent gas pollution, leading to many pollution problems. On the other hand, the spraying process has the disadvantages of time-consuming, complicated process, and low thickness uniformity, so the overall production yield and cost need to be improved urgently. To solve the problems, various specific decoration processes using decorative films have been proposed. For example, in-mold decoration (IMD) or out mold decoration (OMD) has become an alternative for forming surface graphics.

Currently, the commonly used polymer substrate materials in in-mold decoration include polycarbonate (PC), polymethyl methacrylate, also known as poly(methyl methacrylate) (PMMA), polyethylene terephthalate (PET), and acrylonitrile-butadiene-styrene (ABS). However, a substrate including PC and ABS has a low level of hardness, which subjects the surface of the substrate to damage. Therefore, generally the substrate is coated with a protective layer to increase the hardness and scratch resistance of the substrate surface. On the other hand, a substrate including PMMA has a high level of hardness, but it is easy to crack during forming, leading to difficulty in performing a hot press process.

Specifically, in-mold decoration (IMD) may include in mold labeling (IML), in mold film (IMF or INS), and in mold roller (IMR) as shown in Table 1. In mold labeling (IML) is characterized by a hardened transparent film on the surface, a printed pattern layer in the middle, and a plastic layer on the back. The ink is sandwiched between the hardened transparent film and the plastic layer, so the surface of the product may be prevented from being scratched, it is abrasion-resistant, and the color brightness may last and does not fade easily for a long time. The IML process flow is as follows:
(1) Cutting: take the roll-shaped film substrate (usually PMMA/PC or PET or PC substrate with hard coating), and cut it into the designed size for printing and blister molding.
(2) Plane printing: usually screen printing (silk screen printing), ink-jet printing process for providing graphics, text effects and final anti-impact adhesive materials, and generally the number of the printings is determined according to the effect of the product design, especially the anti-impact adhesive material need to be matched with the high-temperature and high-pressure injection molding plastic materials (generally, the injection molding temperature is about 200°C or higher), so usually need to print a plurality of stacks, which results in increased costs, reduced film usage efficiency, and reduced overall yield.
(3) Ink drying: the printed ink is baked and dried at high temperature to ensure the physical properties of the ink.
(4) Adhering protective film: to prevent the post-punching positioning hole from damaging the surface of the printed film, so a protective film must be attached to protect the surface.
(5) Punching positioning hole: since the film will shrink during the molding and heating process, it is necessary to punch the positioning hole design, which is to ensure the precision of the positioning of the printed film and its matching product.
(6) High-temperature and high-pressure molding: after the printed film is subjected to high temperature and high heat steps, the molding machine is used for blistering under preheating condition.
(7) Cutting shape: use blade cutting or laser cutting to cut off the waste of the three-dimensional film after blistering.
(8) Injection molding: finally, place the cut three-dimensional film on the injection molding machine for injection molding to form final product and perform related physical inspection of shipments.

The in mold roller (IMR) is to print a pattern on the film, and through a film feeder, the film is attached to the mold cavity and then injected. After the injection, the patterned ink layer is separated from the film, the ink layer is left on the plastic part, and a plastic part with a decorative pattern on the surface is obtained. Therefore, the surface of the final product processed by in mold roller does not have a transparent protective film, and the film is only a carrier in the production process. That is, the biggest difference between in mold labeling (IML) and in mold roller (IMR) is whether there is a transparent protective film on the surface of the product. Moreover, in mold film (IMF) is similar to in mold labeling (IML).

**Table 1**

| model | Introduction |
|---|---|
| IMR | In mold roller: the film peels off and does not remain on the surface after ink transfer. |
| | The surface of the final product does not have a transparent protective film, and the film is only a carrier in the production process. The degree of automation in production is high and the cost of mass production is low. The disadvantage is that the printed pattern layer is thin on the surface of the product. After the product is used for a period of time, the printed pattern layer is easily worn off, and the color is also easy to fade, resulting in an unsightly surface. |
| IML | In mold labeling: the film may remain in the appearance to form a protective layer. |
| | The surface is a hardened transparent film, the middle is a printed pattern layer, and the back is a plastic layer. The ink is sandwiched in the middle, so the surface of the product may be prevented from scratches and abrasion, and the color brightness may last and does not fade easily for a long time. |
| INS | INS process is to form a glue film after film printing and bonding to the substrate, and the glue film may be formed as a product by performing 3D molding, then being cut and injected. |

Out mold decoration (OMD) is also known as high-pressure transfer printing. After printing the pattern on the transparent film, high/medium/low pressure and vacuum transfer are used to directly transfer the pattern to the plastic shell. The main feature is tactile products and used in 3C, home appliances, and automobiles.

However, regardless of IMD or OMD film, printing and stacking are used for processing light-transmitting decorated molding articles. The blister, cutting, and injection molding processes performed by a client may lead to disadvantages such as difficult alignment, excessive material loss and increased costs, and the difficulty of the subsequent laser engraving process also makes it impossible to process products such as light-transmitting patterns.

Table 2 illustrates the characteristics and advantages of various conventional decoration techniques.

**Table 2**

| | | | |
|---|---|---|---|
| Process characteristics | Injection is required to be performed before surface post-processing, and it is difficult to do multi-color processing process. | A variety of multi-color printings on the substrate film are required, and after a variety of combinations are performed, the injection molding is then performed. | A variety of multi-color printings on the substrate film are required, and after a variety of combinations are performed, the part is completed by high-pressure forming and bonding. |
| Laser engraving and translucent processing | 1. The process is cumbersome and difficult to process | 1. Thin-film laser engraving is not easy and easily leads to poor results. | |
| | | 2. It is not easy to maintain the physical properties of the product surface in the laser engraving region after laser engraving. | |
| | 2. Higher cost | | |
| | 3. High degree of environmental pollution | | |
| | | 3. The client accordingly needs to perform the positioning and molding process, which results in difficult alignment, high cost, and poor yield performance. | |

### SUMMARY

The disclosure provides a method of fabricating a decorated molding article including: providing a coating, wherein the coating at least comprises a protective material, an ink material, and a bonding material uniformly mixed together; forming the coating on a substrate by using a coating method or a printing method; performing a first curing step to form a composite layer structure, wherein the composite layer structure at least comprises an optical hardening layer disposed on the substrate; performing a blister molding process to form a molded film; performing a second curing step to increase a hardness of the molded film; performing a laser engraving process to form a groove; forming a protective layer in the groove; and attaching the molded film onto a surface of a workpiece to form a decorated molding article.

In an embodiment of the disclosure, the protective material comprises polymethyl methacrylate (PMMA), aliphatic urethane diacrylate, epoxy acrylate (EA), polyester polyol, or a combination thereof; the ink material comprises polyurethane (PU); and the bonding material comprises thermoplastic polyurethane (TPU), aromatic urethane diacrylate, or a combination thereof.

In an embodiment of the disclosure, the protective layer is formed by using a 3D printing method or a jet printing method.

In an embodiment of the disclosure, the attaching the molded film to the surface of the workpiece includes: after performing the blister molding process, performing in-mold decoration or out mold decoration technique to the molded film, so that the molded film is attached to an outer surface of the workpiece to form the decorated molding article.

In an embodiment of the disclosure, the attaching the molded film to the surface of the workpiece includes: after performing the blister molding process, performing in-mold decoration or out mold decoration technique to the molded film, so that the molded film is attached to an inner surface of the workpiece to form the decorated molding article.

The disclosure provides a method of fabricating a decorated molding article including: providing a substrate with a first surface and a second surface opposite to each other; forming a second coating on the second surface of the substrate by using a coating method or a printing method; forming the first coating on the second coating by using a coating method or a printing method; performing a first curing step to form a composite layer structure, wherein the composite layer structure at least comprises: the substrate; a first decoration layer disposed on the second surface of the substrate; and a second decoration layer disposed between the second surface of the substrate and the first decoration layer; performing a blister molding process to form a molded film; performing a laser engraving process to form a groove; forming a protective layer in the groove; and attaching the molded film onto a surface of a workpiece to form a decorated molding article.

In an embodiment of the disclosure, the first coating and the second coating each comprise a protective material, an ink material, and a bonding material uniformly mixed together.

In an embodiment of the disclosure, the protective layer is formed by using a 3D printing method or a jet printing method.

The disclosure provides a method of fabricating a decorated molding article including: providing a coating, wherein the coating at least comprises a protective material, an ink material, and a bonding material uniformly mixed together; forming the coating on a substrate by using a coating method or a printing method; performing a first curing step to form a composite layer structure; performing a blister molding process to form a molded film; performing a second curing step to increase a hardness of the molded film; forming a mask layer on the composite layer structure; performing a laser engraving process to form a groove in the mask layer and the composite layer structure; forming a plating layer on the mask layer by using an evaporation method or a sputtering method, wherein a portion of the plating layer is filled into the groove; removing the mask layer and the plating layer thereon; forming a protective layer in the groove, wherein the protective layer covers the plating layer; and attaching the molded film onto a surface of a workpiece to form a decorated molding article.

In an embodiment of the disclosure, the protective layer is formed by using a 3D printing method or a jet printing method.

In summary, in the disclosure, the all-in-one coating is formed on the substrate and the curing step is performed to form a composite layer structure with protective effects, color effects, and bonding effects. This composite layer structure may form a molded film with better physical properties (e.g., higher hardness, better protection effect, and the like) after the blister molding process. Therefore, the molded film of the embodiments may be applied to a laser engraving process to form a variety of light-transmitting decorated molding articles. In addition, in the disclosure, the protective layer is further partially formed in the groove to protect the laser-engraved texture from damage, thereby improving the protective effect of the composite layer structure and increasing the life time. Moreover, in the disclosure, the laser engraving process is performed after the blister molding process. Therefore, the disclosure may solve the alignment problem of the conventional technology, thereby improving the yield rate and reducing the fabricating cost.

On the other hand, compared to the ink layer or printing layer in the conventional INS that needs to be matched with the substrate bonding process, a plurality of stacked decoration layers in the present embodiment not only provide a variety of color effects, but also have the protective effect and the bonding effect, while no additional bonding process is required. Further, compared with the conventional IML technology, which needs to form additional 3-10 adhesive layers to be attached to the workpiece, the present embodiment does not need to form any additional adhesive layer. That is, the disclosure can effectively simplify the manufacturing steps of the composite layer structure, and provide the composite layer structure with better protective effect and the bonding effect. Furthermore, compared with the conventional spraying technology, INS technology or IML technology, the manufacturing steps of the decorated molding article of the disclosure are more simplified, thereby effectively reducing the manufacturing cost.

### BRIEF DESCRIPTION OF THE DRAWINGS

FIG. 1 is a flow chart illustrating a method of fabricating a decorated molding article according to a first embodiment of the disclosure.
FIG. 2A is a schematic cross-sectional view of a decorated molding article according to the first embodiment of the disclosure.
FIG. 2B is a schematic cross-sectional view of another decorated molding article according to the first embodiment of the disclosure.
FIG. 3 is a flow chart illustrating a method of fabricating a decorated molding article according to a second embodiment of the disclosure.
FIG. 4 is a schematic cross-sectional view of the decorated molding article according to the second embodiment of the disclosure.
FIG. 5 is a flow chart illustrating a method of fabricating a decorated molding article according to a third embodiment of the disclosure.
FIG. 6 is a schematic cross-sectional view of the decorated molding article according to the third embodiment of the disclosure.
FIG. 7 is a schematic cross-sectional view of a decorated molding article according to a fourth embodiment of the disclosure.
FIG. 8 is a schematic cross-sectional view of a decorated molding article according to a fifth embodiment of the disclosure.
FIG. 9 is a flow chart illustrating an in-mold decoration technique according to an embodiment of the disclosure.
FIG. 10 is a flow chart illustrating an out mold decoration technique according to an embodiment of the disclosure.
FIG. 11 is a schematic cross-sectional view of a decorated molding article according to a sixth embodiment of the disclosure.
FIG. 12A is a schematic cross-sectional view of a decorated molding article according to a seventh embodiment of the disclosure.
FIG. 12B and FIG. 12C are schematic top views of the structure of FIG. 12A when the light source is off and when the light source is on, respectively.
FIG. 13A is a schematic cross-sectional view of a decorated molding article according to an eighth embodiment of the disclosure.
FIG. 13B and FIG. 13C are schematic top views of the structure of FIG. 13A when the light source is off and when the light source is on, respectively.
FIG. 14 is a flow chart illustrating a method of fabricating a decorated molding article according to a ninth embodiment of the disclosure.
FIG. 15A to FIG. 15E are schematic cross-sectional views of fabricating a decorated molding article according to a ninth embodiment of the disclosure.
FIG. 16 is a schematic cross-sectional view of a decorated molding article according to alternative embodiments of the disclosure.

### DESCRIPTION OF THE EMBODIMENTS

In the subsequent paragraphs, the disclosure will be described holistically with reference to the accompanying drawings. However, the disclosure may be implemented in many different forms and is not limited to the embodiments illustrated in the text. Directional terminology mentioned in the following embodiments, such as such as "top", "bottom", etc., is used with reference to the orientation of the drawings being described. Therefore, the used directional terminology is only intended to illustrate, rather than limit, the disclosure. Moreover, for clarity, a thickness of each film layer and region may be enlarged. The same or similar elements will be given the same or similar reference numerals and their description will be omitted in the subsequent paragraphs.

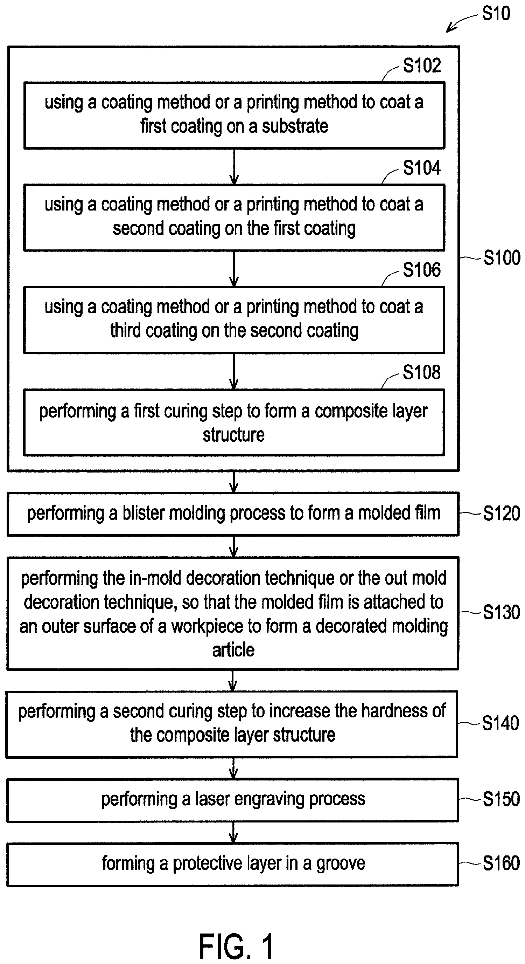

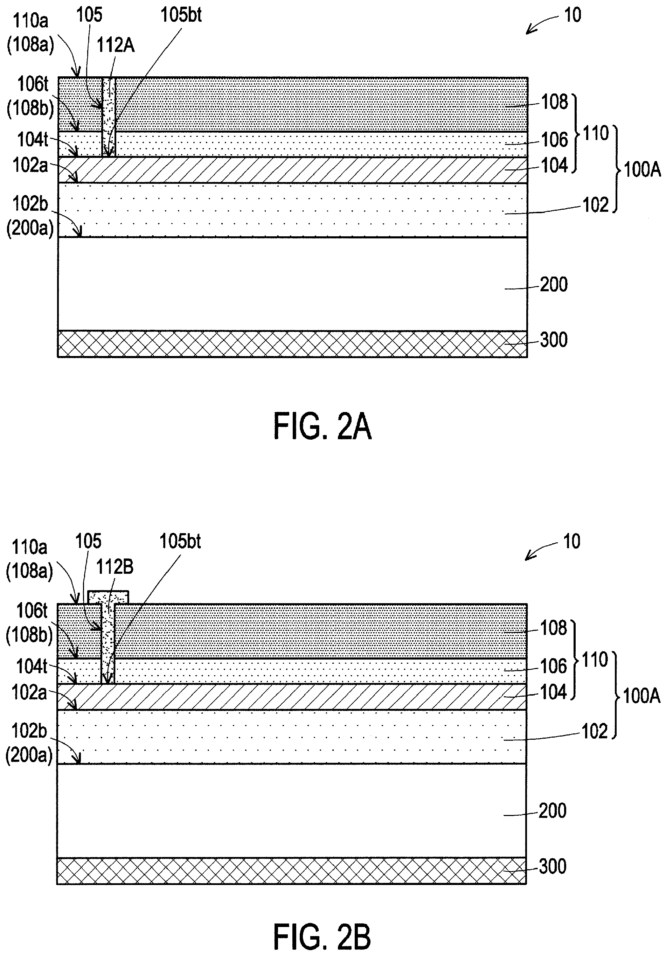

FIG. 1 is a flow chart illustrating a method of fabricating a decorated molding article according to a first embodiment of the disclosure. FIG. 2A is a schematic cross-sectional view of the decorated molding article according to the first embodiment of the disclosure.

Referring to FIG. 1 and FIG. 2A, the first embodiment of the disclosure provides the fabricating method S10 of a decorated molding article 10 as follows. Step S100 is performed to form a composite layer structure 110 (as shown in FIG. 2A). Specifically, the step of forming the composite layer structure 110 includes steps as follows. Step S102 is performed. A coating method or a printing method is used to form a first coating on a substrate 102 (as shown in FIG. 2A). In one embodiment, the material of the substrate 102 includes acrylonitrile-butadiene-styrene copolymer (ABS), polycarbonate (PC), polymethyl methacrylate (PMMA), or a combination thereof, and the method of forming the same includes extrusion molding method and so on. For example, the ABS solid plastic may be heated, melted, extruded, and cooled to form the ABS substrate 102 by an extrusion molding method. Moreover, ABS solid plastic may be mixed with color masterbatch, pigments, pearl powder, and related additives to form a mixture. Then, the mixture is extruded by an extrusion molding method to form another ABS substrate, so that the ABS substrate has visual effects such as colors, pearly luster, a bright surface, a mirror surface, a lusterless matte surface, and the like. In alternative embodiments, the material of the substrate 102 may also be wood veneer, aluminum sheet, steel plate, the like. or a combination thereof.

Specifically, in the coating method, the coating material is distributed in a coating device, and the coating material is uniformly coated on the substrate 102 through the coating head of the coating device. In an embodiment, the opening of the coating head may be flat, so that the coating material coated on the substrate 102 has a bright surface effect. In another embodiment, the opening of the coating head may have multiple microstructures (e.g., micro-dents), so that the coating material coated on the substrate 102 has a matting effect. In an alternative embodiment, the opening of the coating head may have multiple concave-convex structures, so that the coating material coated on the substrate 102 has a hairline effect. On the other hand, the printing method may include an appropriate printing method such as gravure printing method, screen printing method, offset printing method, reverse printing method, transfer printing method, inkjet printing method, or the like. Compared with the coating method, the printing method may form a thinner film layer.

In an embodiment, the first coating at least includes a protective material, an ink material, and a bonding material which are uniformly mixed together. The protective material may include polymethyl methacrylate (PMMA), aliphatic urethane diacrylate, epoxy acrylate (EA), polyester polyol, or a combination thereof; the ink material may include polyurethane (PU) and similar materials; and the bonding material may include thermoplastic polyurethane (TPU), aromatic urethane diacrylate, or a combination thereof. Moreover, the first coating further includes a heat-resistant material, a solvent, and a hardener. In an embodiment, the heat-resistant material may include polycarbonate (PC) and similar materials; the solvent may include ethyl acetate, methyl ethyl ketone, toluene, xylene, or a combination thereof; and the hardener may include polyisocyanate and similar materials. However, the disclosure is not limited thereto. In other embodiments, the first coating may also include other additives, such as matting powder, pearl powder, and the like, so that a first decoration layer 104 (as shown in FIG. 2A) formed in the subsequent process has different visual effects such as a matte surface and pearly luster.

Then, proceed to step S104. A second coating is formed on the first coating by using a coating method or a printing method. In one embodiment, the second coating includes at least a protective material, an ink material, and a bonding material uniformly mixed together. Moreover, the coating method, printing method, protective material, ink material, and bonding material have been illustrated in detail in the foregoing paragraphs, which are not iterated herein. Note that the first coating is used to form the first decoration layer 104, and the second coating is used to form a second decoration layer 106 as shown in FIG. 2A. In the embodiment, the first coating and the second coating have different compositions to achieve different visual effects. In another embodiment, the decoration layers 104 or 106 may also use evaporation or sputtering to achieve a metalized decoration effect. For example, the first decoration layer 104 formed by the first coating may be a wood grain layer, and the second decoration layer 106 formed by the second coating may have a matte silver color, so that the composite layer structure 110 exhibits a matte silver color in a wood grain pattern.

Then, proceed to step S106. A third coating is formed on the second coating by using a coating method or a printing method. In one embodiment, the third coating includes at least a protective material, an ink material, and a bonding material uniformly mixed together. Moreover, the coating method, printing method, protective material, ink material, and bonding material have been illustrated in detail in the foregoing paragraphs, which are not iterated herein. Note that the third coating is used to form an optical hardening layer 108. In the embodiment, the content of the protective material in the third coating may be higher than the content of the protective material in the first coating or the second coating.

Subsequently, proceed to step S108. A first curing step is performed to form the composite layer structure 110. As shown in FIG. 2A, the composite layer structure 110 includes the first decoration layer 104, the second decoration layer 106, and the optical hardening layer 108. The first decoration layer 104 may be disposed on a first surface 102a of the substrate 102. The second decoration layer 106 may be disposed on the first decoration layer 104. The optical hardening layer 108 may be disposed on the second decoration layer 106 such that the second decoration layer 106 is disposed between the first surface 102a of the substrate 102 and the optical hardening layer 108. Although only two decoration layers 104 and 106 are illustrated in FIG. 2A, the disclosure is not limited thereto. In other embodiments, the composite layer structure 110 may also have multiple (e.g., three, four, or more layers) stacked decoration layers. Further, in addition to the coating method, the optical hardening layer 108 may also be formed on the second decoration layer 106 by using a laminating method, an embossing method, a 3D printing method or a jet printing method. In alternative embodiments, the material of the optical hardening layer 108 may also be a UV material or a thermal curing material.

In an embodiment, the first curing step may include a thermal curing step, an ultraviolet (UV) curing step, a combination thereof, or other suitable curing steps. This first curing step may cause the bonding material to undergo a cross-linking reaction and be bonded to the substrate 102. In the embodiment, the coating material may be regarded as an all-in-one coating material, which allows the cured composite layer structure 110 to have a protective effect, a color effect, and a bonding effect altogether. In this case, the composite layer structure 110 may also be referred to as an all-in-one composite layer structure. Compared with the steps in which the purchase of a protective layer is required and an adhesive film structure is formed through a printing and bonding process in the prior art, the disclosure may effectively facilitate the fabricating steps, reduce the fabricating cost, and prevent the pollution problems caused by the adhesive film.

Compared to the ink layer or printing layer in the conventional INS that needs to be matched with the substrate bonding process, a plurality of stacked decoration layers in the present embodiment not only provide a variety of color effects, but also have the protective effect and the bonding effect, while no additional bonding process is required. That is, the disclosure can effectively simplify the manufacturing steps of the composite layer structure, and provide the composite layer structure with better protective effect and the bonding effect. Furthermore, compared with the conventional spraying technology or INS technology, the manufacturing steps of the composite layer structure of the disclosure are more simplified, thereby effectively reducing the manufacturing cost.

After the composite layer structure 110 is formed, proceed to step S120. A blister molding process is performed to form a molded film 100A. In one embodiment, the blister molding process includes heating the composite layer structure 110 and the substrate 102 to soften the composite layer structure 110 and the substrate 102; putting the softened composite layer structure 110 and the substrate 102 into a mold and pressurizing them, so that the softened composite layer structure 110 and the substrate 102 are molded into a desired shape; performing a cooling step; and cutting the excess part to form the molded film 100A.

Then, proceed to step S130. The in-mold decoration technique or the out mold decoration technique are performed, so that the molded film 100A is attached to an outer surface 200a of a workpiece 200 to form the decorated molding article 10 as shown in FIG. 2A. In one embodiment, the substrate 102 has a first surface 102a and a second surface 102b opposite to each other. As shown in FIG. 2A, the second surface 102b of the substrate 102 is in contact with the outer surface 200a of the workpiece 200, the first surface 102a of the substrate 102 is in contact with the first decoration layer 104, and a top surface 110a of the composite layer structure 110 is exposed upward.. In the embodiment, the top surface 110a of the composite layer structure 110 may be a visual surface, so that consumers may oversee the visual effect of the molded film 100A from the top surface 110a of the composite layer structure 110.

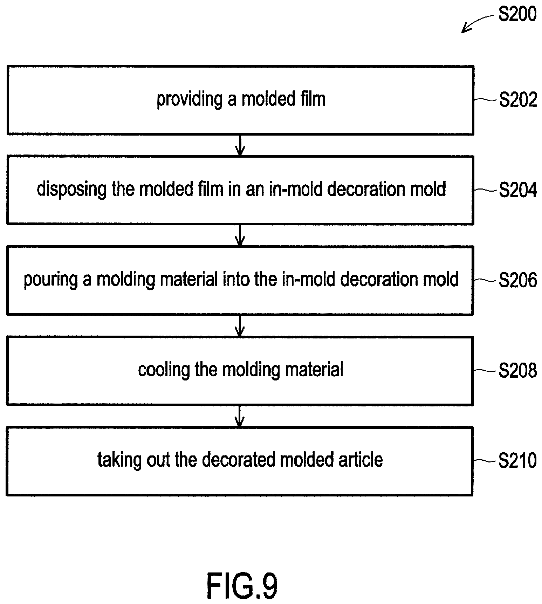

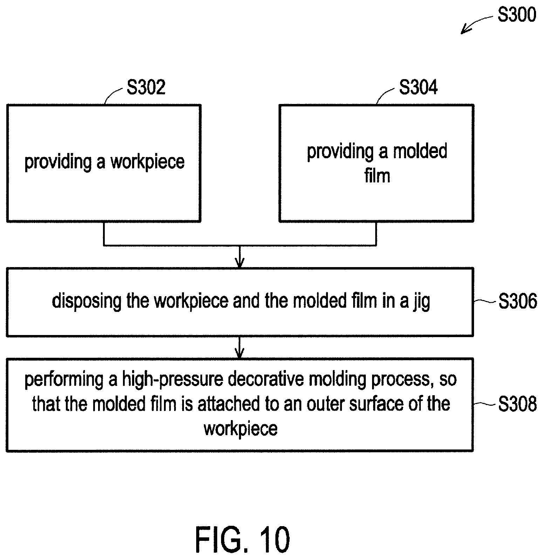

FIG. 9 is a flow chart illustrating an in-mold decoration technique according to an embodiment of the disclosure. FIG. 10 is a flow chart illustrating an out mold decoration technique according to an embodiment of the disclosure.

Referring to FIG. 9, the step S200 of the in-mold decoration technique is illustrated as follows. First, step S202 is performed to provide a molded film. This molded film may be the molded film 100A, for example. The composition of the molded film 100A has been illustrated in the foregoing paragraphs, which is not iterated herein.

Next, proceed to step S204. The molded film 100A is disposed in the in-mold decoration mold. Specifically, the in-mold decoration mold includes a hollow mold cavity. The mold cavity has a surface. Subsequently, the molded film 100A is attached to the surface of the mold cavity so that the molded film 100A covers at least a part of the surface of the mold cavity. In an alternative embodiment, before step S206, a heating pre-forming process may be selectively performed and the excess film may be removed by die cutting, laser cutting, or waterjet cutting.

Then, proceed to step S206. The molding material is poured into the mold cavity of the in-mold decoration mold, so that the molding material and the molded film 100A are combined with each other. In one embodiment, the molding material may be suitable for molding, such as plastic material, resin material, metal material, carbon fiber material, glass, and the like.

Subsequently, proceed to step S208. The molding material is cooled to form the workpiece 200. The workpiece 200, subject to the application of the decorated molding article of the disclosure, may be an electronic device housing or component, a vehicle housing or component, or a combination thereof. For example, the workpiece 200 may be mobile phones, digital cameras, personal digital assistants (PDAs), laptop computers, desktop computers, touch panels, TVs, satellite positioning system (GPS) devices, car monitors, navigation devices, displays, digital photo frames, DVD players, automotive interior trim panels (e.g. handles, trim strips, touch front bumpers, and the like), car exterior decorative panels (e.g. exterior handles, back door decorative strips, welcome pedals, and the like), car dashboards, car logos, intelligent keys (I-key), engine start buttons, clocks, radios, toys, watches, or other housings or components used in electronic products that require power. However, the disclosure does not limit the shape and structure of the workpiece 200, and as long as the shape and structure of the workpiece 200 may be implemented by the in-mold decoration technique, they are within the scope of the disclosure.

Next, proceed to step S210. The decorated molding article 10 is taken out from the in-mold decoration mold. The obtained decorated molding article 10 has been illustrated in detail in FIG. 2A, which is not iterated herein.

On the other hand, the decorated molding article 10 may also be fabricated by out mold decoration technique. Referring to FIG. 10, the step S200 of the out mold decoration technique is illustrated as follows. First, step S302 is performed to provide the workpiece 200. In an embodiment, the workpiece 200, subject to the application of the decorated molding article of the disclosure, may be an electronic device housing or component, a vehicle housing or component, or a combination thereof. In an alternative embodiment, the material of the outer surface 200a of the workpiece 200 may be plastic, resin, metal, carbon fiber, glass, or other various shell materials that have been formed, and for example, the workpiece may be fabricated with the required characteristics after a proper pre-treatment process. For example, when the material of the workpiece is plastic, a plastic workpiece (e.g., a plastic housing and the like) may be obtained through an injection molding mold by an injection molding process, or when the material of the workpiece is metal, a metal workpiece (e.g., a metal housing and the like) may be obtained after the metal is surface treated.

Next, proceed to step S304. A molded film is provided. For example, the molded film may be the molded film 100A shown in FIG. 2A. The composition of the molded film 100A has been illustrated in the foregoing paragraphs, which is not iterated herein.

Subsequently, proceed to step S306. The workpiece 200 and the molded film 100A are disposed in a jig. Note that before step S306, the jig may be selectively designed according to the requirements of the final product, and the jig may be prepared.

Then, proceed to step S308. A high-pressure decorative molding process is performed, so that the molded film 100A is attached to the outer surface 200a of the workpiece 200. Specifically, in the high-pressure decorative molding process, a heating and softening step is first performed on the molded film 100A, for example. In one embodiment, the temperature of the heating and softening step may range from 80° C to 150° C.; the time of the heating and softening step may range from 30 seconds to 180 seconds. Next, the molded film 100A is brought into contact with the workpiece 200, and a pressing step is performed. Subsequently, a high-pressure vacuum forming step is performed on the molded film 100A, so that the molded film 100A is attached to the workpiece 200. Finally, the remaining composite layer structure is removed selectively by die cutting, laser cutting, or waterjet cutting. In short, in the embodiment, the molded film 100A may be tightly attached to a part of the outer surface 200a of the workpiece 200 by the out mold decoration technique.

Referring to FIG. 1 again, after the decorated molding article 10 is formed, proceed to step S140. A second curing step is performed to increase the hardness of the composite layer structure 110. In an embodiment, the second curing step may include a thermal curing step, an ultraviolet (UV) curing step, a combination thereof, or other suitable curing steps. In the embodiment, the first curing step is different from the second curing step. For example, the first curing step may be a thermal curing step, and the second curing step may be a UV curing step, and vice versa. In an alternative embodiment, when the first curing step and the second curing step are both thermal curing steps, the curing temperature of the second curing step may be higher than the curing temperature of the first curing step. Note that this second curing step may cause the protective material to undergo a cross-linking reaction, so as to increase the hardness of a top surface 108a of the optical hardening layer 108, thereby enhancing the protective effect. That is, when performing the in-mold decoration or the out mold decoration technique (i.e., step S130), the optical hardening layer 108 is not yet completely cured and has ductility, and thereby it is completely attached to the outer surface 200a of the workpiece 200. After the second curing step (i.e., step S140), the optical hardening layer 108 is completely cured and has an overall protective effect. In the embodiment, the hardness of the optical hardening layer 108 may have a gradient change. Specifically, the hardness of the optical hardening layer 108 may increase from the bottom surface 108b toward the top surface 108a. That is, the hardness of the top surface 108a of the optical hardening layer 108 may be greater than the hardness of the bottom surface 108b of the optical hardening layer 108. Moreover, the second curing step may also increase the hardness of the first decoration layer 104 and the second decoration layer 106 to facilitate the subsequent laser engraving process (i.e., step S150).

Then, proceed to step S150. A laser engraving process is performed to form a groove 105 in the composite layer structure 110. As shown in FIG. 2A, the groove 105 may extend downward from the top surface 110a of the composite layer structure 110 to expose a top surface 104t of the first decoration layer 104. However, the disclosure is not limited thereto. In other embodiments, the groove 105 may also have different depths. That is, a bottom surface 105bt of the groove 105 may be higher or lower than the top surface 104t of the first decoration layer 104, or the bottom surface 105bt of the groove 105 may be higher than, lower than, or equal to a top surface 106t of the second decoration layer 106. Moreover, although only one groove 105 is illustrated in FIG. 2A, the disclosure is not limited thereto. In alternative embodiments, the decorated molding article 10 may have multiple grooves to form various laser engraved patterns, and thereby improving the visual perception of consumers.

Afterward, proceed to step S160. A protective layer 112A is formed in the groove 105. Specifically, the protective layer 112A is formed by a three-dimensional (3D) printing technology. In one embodiment, the 3D printing technology includes an aerosol jet printing process. The aerosol jet printing process uses an aerosol jet deposition head to form an annularly propagating jet constituted by an outer sheath flow and an inner aerosol-laden carrier flow. During the annular aerosol jet printing process, an aerosol stream of the to-be-deposited materials is concentrated and deposited onto a surface to be formed. Said step may be referred to as maskless mesoscale material deposition (M3D), i.e., the deposition step can be performed without using any mask. In alternative embodiments, the protective layer 112A is also formed by a jet printing technology.

In the present embodiment, as shown in FIG. 2A, a filling ink is filled into the groove 105 through a nozzle of a 3D printing device. In one embodiment, the filling ink may be similar to the said third coating, which at least includes protective material, an ink material, and a bonding material uniformly mixed together, and the content of the protective material in the filling ink may be higher than the content of the protective material in the first coating or the second coating. In addition, after the filling ink is filled into the groove 105, an additional curing step may be performed, so that the protective material in the filling ink undergoes a cross-linking reaction, thereby increasing the hardness of the protective layer 112A. In this case, the protective layer 112A can partially protect the laser-engraved texture, that is, the first decoration layer 104 and the second decoration layer 106 exposed by the groove 105 can be protected from being damaged, so as to further enhance the protection effect of the composite layer structure 110 and increase the life time.

It should be noted that, in the present embodiment, the nozzle used in the 3D printing technology is small enough, so the filling ink can be accurately filled in the groove to form the protective layer locally, thereby protecting the laser-engraved texture. Compared with the general spraying technology that volatilizes a large amount of the coating into the air, the use of 3D printing technology in the present embodiment can effectively reduce material consumption and reduce fabrication costs. In addition, the nozzles of the general spraying technology are relatively large, which makes the sprayed layer is dotted and distributed discontinuously, thereby resulting in the rough and uneven spraying effect. On the other hand, the 3D printing technology nozzle of the present embodiment is small enough, it can completely fill the filling ink into the narrow groove and distribute the filling ink continuously on the surface of the object, so that the protective layer is smoother and more beautiful. Further, the 3D printing technology of the present embodiment also be locally toned. That is, in the present embodiment, the protective layers of different colors can be filled in different groove positions according to customer's requirements, so as to increase the visual experience of viewers.

Furthermore, although the protective layer 112A illustrated in FIG. 2A is only located in the groove 105 , that is, the top surface of the protective layer 112A is coplanar with the top surface 108a of the optical hardening layer 108, the invention is not limited thereto. In other embodiments, as shown in FIG. 2B, the protective layer 112B may also extend from the groove 105 to cover the top surface 108a of the optical hardening layer 108. The protective layer 112B may adjust the range or area of the extension portion according to design requirements.

Next, referring back to FIG. 2A, the decorated molding article 10 may be disposed on a light source 300 to emit light of various colors through the protective layer 112A in the groove 105. For example, the light source 300 may be blue light, the protective layer 112A is a white light-transmitting material, and the second decoration layer 106 may be a wood grain layer. When the light source 300 is off, the consumer may see a laser engraved pattern with the white light transmission on the wood grain layer from the visual surface 1 10a. On the other hand, when the light source 300 is on, the consumer may see a laser engraved pattern with the blue light effect from the visual surface 110a through the protective layer 112A in the groove 105. In an embodiment, the light source 300 may include an LED point light source, an LED light bar, a mini LED, and the like. In addition, the protective layer 112A may also have various colors to combine with the light source 300 to produce different color mixing effects. For example, when the light source 300 is blue light and the protective layer 112A is a red light-transmitting material, when the light source 300 is turned on, the consumer may see a laser engraved pattern with the purple light effect from the visual surface 110a through the protective layer 112A in the groove 105. In alternative embodiments, the protective layer 112A may also be made of a semi-transparent material or an opaque material.

In the conventional spraying technology, multiple spraying steps and multiple laser engraving steps are required to form a multi-color film. The technology has disadvantages of complicated fabricating process, difficult processing, high cost, and heavy environmental pollution. Moreover, in the conventional decoration process (e.g., IMD or OMD), a hollow printing method is usually used to form the multi-color film. However, this technology may have disadvantages, such as difficult alignment, low yield, excessive material consumption, and high cost after the client undergoes processes such as blister molding, cutting, and injection molding. Moreover, the IMD film or the OMD film is relatively thin, which does not benefit the laser engraving process. That is, even if the laser engraving process is performed, the laser engraved film may peel off or be damaged due to poor physical properties of the surface, and accordingly an additional protective coating is required to protect the film, leading to an increase of the cost.

To solve the problems, in the embodiment of the disclosure, an all-in-one coating is formed on a substrate, a curing step is performed, and thereby a composite layer structure with a protective effect, a color effect, and a bonding effect is formed. The composite layer structure may form a molded film with better physical properties (e.g., higher hardness, better protection effect, and the like) after the blister molding process. In addition, compared with the conventional spraying technology or INS technology, the manufacturing steps of the composite layer structure of the disclosure are more simplified, thereby effectively reducing the manufacturing cost. Therefore, the molded film of the embodiment may be applied in a laser engraving process to form a variety of light-transmitting decorated molding articles. Further, the disclosure further partially forms the protective layer 112A or 112B in the groove 105 to protect the laser-engraved texture from damage, thereby improving the protective effect of the composite layer structure 110 and increasing the life time.

In addition, the traditional in-mold labeling (IML) technology is to perform screen printing on the backside of the substrate (e.g., PC, PMMA, ABS, etc.) to form a 3-5 decoration layers, and then form 3-10 adhesive layers to be attached onto the workpiece. Compared with the conventional IML technology, the substrate 102 of the present embodiment will be melted due to high temperature and high pressure during the injection molding process, and then can be directly bonded to a portion of the outer surface 200a of the workpiece 200. That is, compared with the conventional IML technology, the disclosure does not need to form any additional adhesive layer, so that the manufacturing steps of the decorated molding article are simplified and the manufacturing cost is reduced.

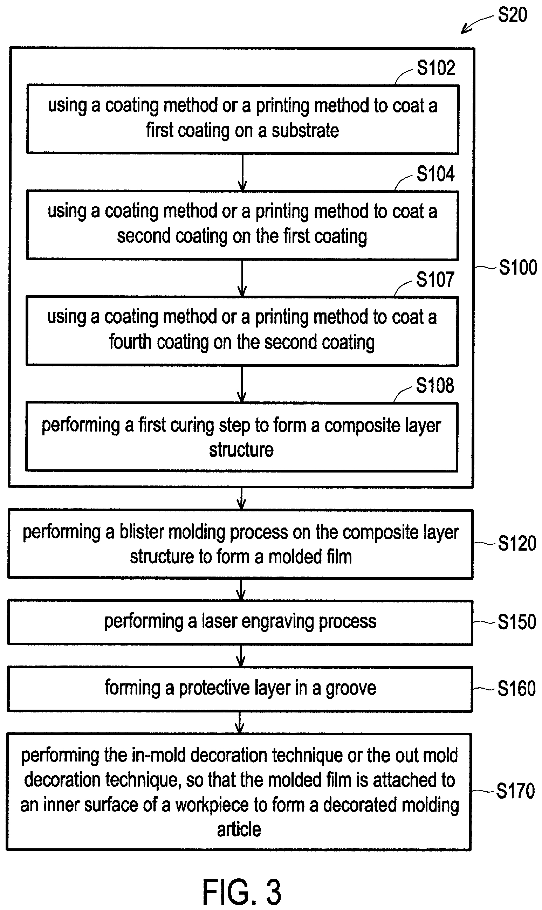

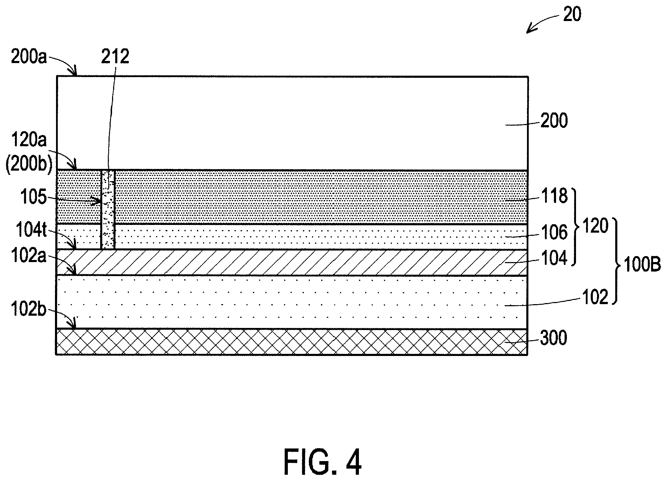

FIG. 3 is a flow chart illustrating a method of fabricating a decorated molding article according to a second embodiment of the disclosure. FIG. 4 is a schematic cross-sectional view of the decorated molding article according to the second embodiment of the disclosure.

Referring to FIG. 3 and FIG. 4, the second embodiment of the disclosure provides the method S20 for fabricating a decorated molding article 20 as follows. Step S100 is performed to form a composite layer structure 120 (as shown in FIG. 4). Specifically, forming the composite layer structure 120 includes performing step S102 to form the first coating on the substrate 102 by using a coating method or a printing method (as shown in FIG. 4). Then, step S104 is performed to form the second coating on the first coating by using a coating method, a printing method, or a 3D printing method. Then, step S107 is performed to form a fourth coating on the second coating by using a coating method, a printing method, or a 3D printing method. In an embodiment, the fourth coating at least includes a protective material, an ink material, and a bonding material uniformly mixed together. Moreover, the coating method, printing method, protective material, ink material, and bonding material have been illustrated in detail in the foregoing paragraphs, which are not iterated herein. Note that the fourth coating is used to form an anti-impact adhesive layer 118 (as shown in FIG. 4). In the embodiment, the content of the bonding material in the fourth coating may be higher than the content of the bonding material in the first coating or the second coating, so as to increase the adhesion between the composite layer structure 120 and the subsequently formed workpiece 200 to form the composite layer structure 120. As shown in FIG. 4, the composite layer structure 120 includes the first decoration layer 104, the second decoration layer 106, and the anti-impact adhesive layer 118. The first decoration layer 104 may be disposed on the first surface 102a of the substrate 102. The second decoration layer 106 may be disposed on the first decoration layer 104. The anti-impact adhesive layer 118 may be disposed on the second decoration layer 106 so that the second decoration layer 106 is disposed between the first surface 102a of the substrate 102 and the anti-impact adhesive layer 118. Further, in addition to the coating method, the anti-impact adhesive layer 118 may also be formed on the second decoration layer 106 by using a laminating method, an embossing method, a 3D printing method or a jet printing method. Compared with the ink layer or printing layer in the conventional INS that needs to be matched with the substrate bonding process and the conventional IML technology, which needs to form additional 3-10 adhesive layers to be attached to the workpiece, the anti-impact adhesive layer 118 of the present embodiment not only provides the color effect, but also have the high temperature resistance, the protection effect and the bonding effect, while no additional bonding process or no additional adhesive layer is required. That is, the disclosure can effectively simplify the manufacturing steps of the composite layer structure 120, and provide the composite layer structure 120 with better high temperature resistance, protection effect and bonding effect. Furthermore, compared with the conventional spraying technology, INS or IML technology, the manufacturing steps of the composite layer structure of the disclosure are more simplified, thereby effectively reducing the manufacturing cost.

After the composite layer structure 120 is formed, proceed to step S120. A blister molding process is performed to form a molded film 100B.

Then, proceed to step S150. A laser engraving process is performed to form the groove 105 in the composite layer structure 120. As shown in FIG. 4, the groove 105 may extend downward from the top surface 120a of the composite layer structure 120 to expose the top surface 104t of the first decoration layer 104. However, the disclosure is not limited thereto. In other embodiments, the groove 105 may also have different depths.

Subsequently, proceed to step S160. A protective layer 212 is formed in the groove 105. In one embodiment, the protective layer 212 may be formed by a 3D printing technology. Specifically, a filling ink is filled into the groove 105 through a nozzle of a 3D printing device. In one embodiment, the filling ink may be similar to the said fourth coating, which at least includes protective material, an ink material, and a bonding material uniformly mixed together, and the content of the bonding material in the filling ink may be higher than the content of the bonding material in the first coating or the second coating. In addition, after the filling ink is filled into the groove 105, an additional curing step may be performed to increase the adhesion between the composite layer structure 120 and the subsequently formed workpiece 200. In this case, the protective layer 212 can partially protect the laser-engraved texture, that is, the first decoration layer 104 and the second decoration layer 106 exposed by the groove 105 can be protected from being damaged, so as to further enhance the protection effect of the composite layer structure 120 and increase the life time. In alternative embodiments, the protective layer 212 is also formed by a jet printing technology.

In alternative embodiments, the 3D printing technology may be used to backfill the protective layer into the laser-engraved light-transmitting region (e.g., the groove 105), while the 3D printing technology may also make different effects in the non-laser-engraved light-transmitting region, for example, forming a logo, gradient, or other similar opaque film effects. Afterward, an additional optical hardening layer may be optionally formed by a laminating method, an embossing method, a 3D printing method or a jet printing method.

Afterward, proceed to step S170. The in-mold decoration technique or the out mold decoration technique is performed, so that the molded film 100B is attached to the inner surface 200b of the workpiece 200 to form the decorated molding article 20 as shown in FIG. 4. Specifically, the inner surface 200b of the workpiece 200 may be in contact with the top surface 120a of the composite layer structure 120 and the top surface of the protective layer 212. In the embodiment, the outer surface 200a of the workpiece 200 may be a visual surface, so that consumers may oversee the visual effect of the molded film 100B from the outer surface 200a of the workpiece 200 which has a deep crystal-like thickness texture. Moreover, the in-mold decoration and the out mold decoration technique have been illustrated in detail in the foregoing paragraphs, which are not iterated herein.

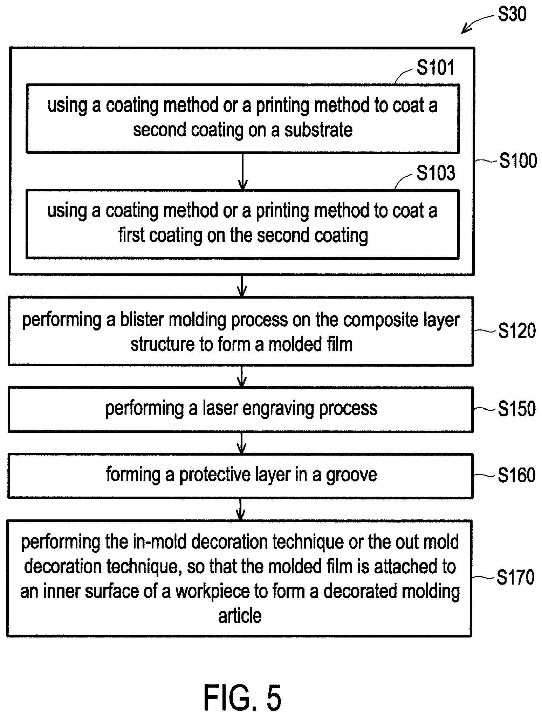

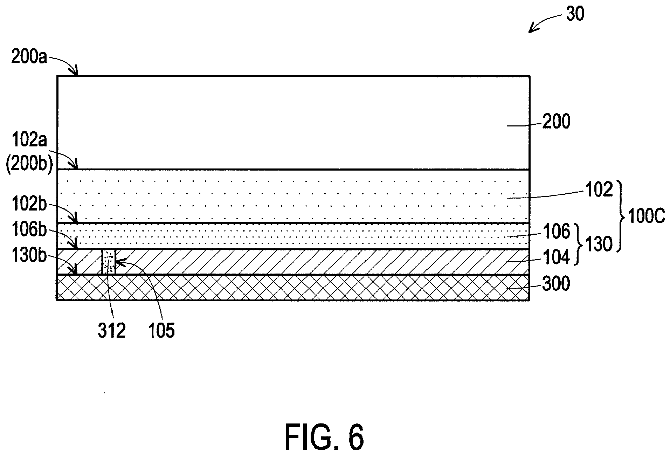

FIG. 5 is a flow chart illustrating a method of fabricating a decorated molding article according to a third embodiment of the disclosure. FIG. 6 is a schematic cross-sectional view of the decorated molding article according to the third embodiment of the disclosure.

Referring to FIG. 5 and FIG. 6, the third embodiment of the disclosure provides the method S30 of fabricating a decorated molding article 30 as follows. Step S100 is performed to form a composite layer structure 130 (as shown in FIG. 6). Specifically, forming the composite layer structure 130 includes performing step S101 to coat the second coating on the substrate (as shown in FIG. 6) by using a coating method or a printing method. Then, step S103 is performed to coat the first coating on the second coating by using a coating method or a printing method. In one embodiment, the first coating is used to form the first decoration layer 104, and the second coating is used to form the second decoration layer 106 as shown in FIG. 6. In the embodiment, the first coating and the second coating do not require additional curing steps (i.e., at room temperature) to form the first decoration layer 104 and the second decoration layer 106, and therefore the composite layer structure 130 is formed. As shown in FIG. 6, the composite layer structure 130 includes the first decoration layer 104 and the second decoration layer 106. The second decoration layer 106 may be disposed on the second surface 102b of the substrate 102. The first decoration layer 104 may be disposed under the second decoration layer 106 so that the second decoration layer 106 is sandwiched between the second surface 102b of the substrate 102 and the first decoration layer 104.

After the composite layer structure 130 is formed, proceed to step S120. A blister molding process is performed to form a molded film 100C.

Then, proceed to step S150. A laser engraving process is performed to form the groove 105 in the composite layer structure 130. As shown in FIG. 6, the groove 105 may extend upward from a bottom surface 130b of the composite layer structure 130 to expose a bottom surface 106b of the second decoration layer 106. However, the disclosure is not limited thereto. In other embodiments, the groove 105 may also have different depths.

Next, proceed to step S160. A protective layer 312 is formed in the groove 105. In one embodiment, the protective layer 312 may be formed by a 3D printing technology. Specifically, a filling ink is filled into the groove 105 through a nozzle of a 3D printing device. In one embodiment, the filling ink may be similar to the said fourth coating, which at least includes protective material, an ink material, and a bonding material uniformly mixed together, and the content of the bonding material in the filling ink may be higher than the content of the bonding material in the first coating or the second coating. In addition, after the filling ink is filled into the groove 105, an additional curing step may be performed to increase the adhesion between the composite layer structure 130 and the light source 300. In this case, the protective layer 312 can partially protect the laser-engraved texture, that is, the first decoration layer 104 and the second decoration layer 106 exposed by the groove 105 can be protected from being damaged, so as to further enhance the protection effect of the composite layer structure 130 and increase the life time. In alternative embodiments, the protective layer 312 is also formed by a jet printing technology.

Afterward, proceed to step S160. The in-mold decoration technique or the out mold decoration technique is performed, so that the molded film 100C is attached to the inner surface 200b of the workpiece 200 to form the decorated molding article 30 as shown in FIG. 6. Specifically, the inner surface 200b of the workpiece 200 is in contact with the first surface 102a of the substrate 102. The light source 300 may be in contact with the bottom surface 130b of the composite layer structure 130 and the bottom surface of the protective layer 312. In the embodiment, the outer surface 200a of the workpiece 200 may be a visual surface, so that consumers may oversee the visual effect of the molded film 100C from the outer surface 200a of the workpiece 200. Moreover, the in-mold decoration and the out mold decoration technique have been illustrated in detail in the foregoing paragraphs, which are not iterated herein.

In the embodiment, as shown in FIG. 6, the decorated molding article 30 may emit light of various colors through the protective layer 312 in the groove 105. For example, the light source 300 may be blue light, the protective layer 312 is a white light-transmitting material, and the second decoration layer 106 may be a geometric pattern layer. When the light source 300 is off, the consumer may see the entire geometric pattern from the visual surface 200a. On the other hand, when the light source 300 is on, the consumer may see the laser engraved pattern with the blue geometric pattern effect from the visual surface 200a through the protective layer 312 in the groove 105. In addition, the protective layer 312 may also have various colors to combine with the light source 300 to produce different color mixing effects.

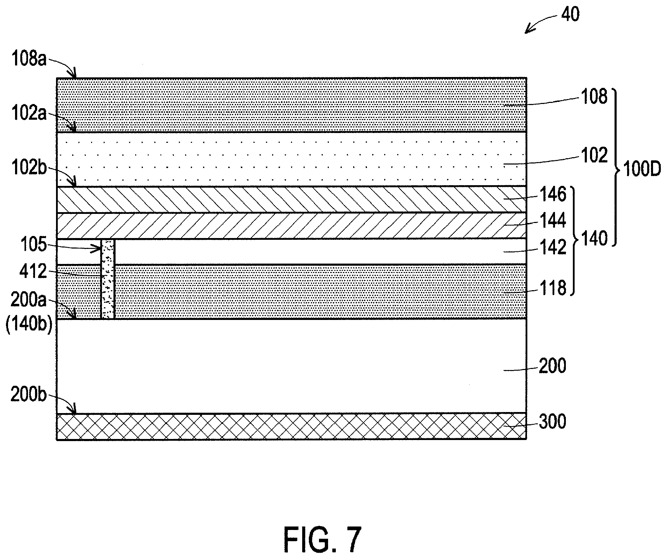

FIG. 7 is a schematic cross-sectional view of a decorated molding article according to a fourth embodiment of the disclosure.

Referring to FIG. 7, a decorated molding article 40 of the fourth embodiment may include the workpiece 200 and a molded film 100D. The molded film 100D may be disposed on the outer surface 200a of the workpiece 200, and the light source 300 may be disposed on the inner surface 200b of the workpiece 200. Specifically, the molded film 100D may include the substrate 102, the optical hardening layer 108, and the composite layer structure 140. The substrate 102 has the first surface 102a and a second surface 102b opposite to each other. The optical hardening layer 108 may be disposed on the first surface 102a of the substrate 102. In the embodiment, the optical hardening layer 108 may be formed of the third coating, and the content of the protective material may be higher than the content of the protective material in the first coating or the second coating. In the embodiment, the optical hardening layer 108 may also be referred to as an all-in-one hard coating. In the embodiment, the top surface 108a of the optical hardening layer 108 may be a visual surface, so that consumers may oversee the visual effect of the molded film 100D from the top surface 108a of the optical hardening layer 108. Further, in addition to the coating method, the optical hardening layer 108 may also be formed on the first surface 102a of the substrate 102 by using a laminating method, an embossing method, a 3D printing method or a jet printing method.

Moreover, the composite layer structure 140 may be disposed on the second surface 102b of the substrate 102. Specifically, from bottom to top, the composite layer structure 140 may sequentially include the anti-impact adhesive layer 118, a buffer layer 142 (or decoration layer), a third decoration layer 144, and a fourth decoration layer 146. In the embodiment, the anti-impact adhesive layer 118 may be formed of the fourth coating, and the content of the bonding material may be higher than the content of the bonding material in the first coating or the second coating. Further, in addition to the coating method, the anti-impact adhesive layer 118 may also be formed by using a laminating method, an embossing method, a 3D printing method or a jet printing method. In one embodiment, the material of the buffer layer 142 includes polyurethane (PU) and polymethyl methacrylate (PMMA), which have the effect of preventing ink wash-off and improving the laser engraving resolution. In one embodiment, the third decoration layer 144 may be formed of the first coating, which may be printed in a single time or multiple times to present different decorative patterns such as wood grain and geometric patterns. In one embodiment, the fourth decoration layer 146 may be formed of the second coating, which may be formed on the second surface 102b of the substrate 102 by a physical vapor deposition method (e.g., an evaporation method, a sputtering method, and the like.), an electroplating method, and the like. For example, the third decoration layer 144 may be a wood grain layer, and the fourth decoration layer 146 may have a vapor-deposited metal layer with a transparency of 50%, so that the composite layer structure 140 exhibits a wood grain pattern with a metallic color with a transparency of 50%. Moreover, although only two decoration layers 144 and 146 are illustrated in FIG. 7, the disclosure is not limited thereto. In other embodiments, multiple decoration layers stacked alternately may be formed according to the requirements of different effects.

Note that the decorated molding article 40 further includes the groove 105 formed in the anti-impact adhesive layer 118 and the buffer layer 142, and a protective layer 412 may be filled into the groove 105 by using a 3D printing technology or a jet printing technology. The material and forming method of the protective layer 412 are the same as those of the protective layers 212 and 312 described above, and will not be repeated here. In other embodiments, the protective layer 412 may also have different depths. That is, the protective layer 412 may also extend upward into the third decoration layer 144 and/or the fourth decoration layer 146. The outer surface 200a of the workpiece 200 may be in contact with the bottom surface 140b of the composite layer structure 140 and the bottom surface of the protective layer 412.

In the embodiment, as shown in FIG. 7, the decorated molding article 40 may emit light of various colors through the protective layer 412 in the groove 105. For example, the light source 300 may be blue light, the protective layer 412 is a white light-transmitting material, and the fourth decoration layer 146 may be a vapor-deposited metal layer with a transparency of 50%. When the light source 300 is off, the consumer may see the entire vapor-deposited metal layer from the visual surface 108a. On the other hand, when the light source 300 is on, the consumer may see the laser engraved pattern with blue metal effect from the visual surface 108a through the protective layer 412 in the groove 105. In addition, the protective layer 412 may also have various colors to combine with the light source 300 to produce different color mixing effects.

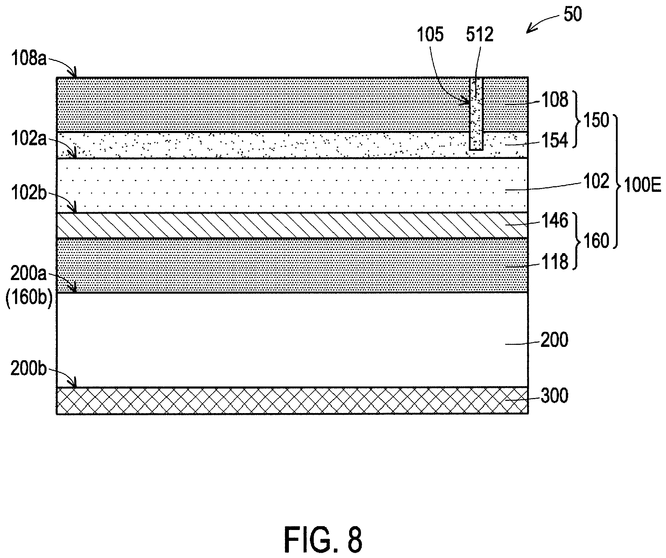

FIG. 8 is a schematic cross-sectional view of a decorated molding article according to a fifth embodiment of the disclosure.

Referring to FIG. 8, a decorated molding article 50 of the fifth embodiment may include the workpiece 200 and a molded film 100E. The molded film 100E may be disposed on the outer surface 200a of the workpiece 200, and the light source 300 may be disposed on the inner surface 200b of the workpiece 200. Specifically, the molded film 100E may include the substrate 102, a first composite layer structure 150, and a second composite layer structure 160. The substrate 102 has the first surface 102a and the second surface 102b opposite to each other. The first composite layer structure 150 may be disposed on the first surface 102a of the substrate 102. The first composite layer structure 150 may include the optical hardening layer 108 and a light-transmitting layer 154. The material of the light-transmitting layer 154 includes poly methacrylic resin, which has a decoration layer effect with chemical resistance. The light-transmitting layer 154 may be in contact with the first surface 102a of the substrate 102, and the optical hardening layer 108 is disposed on the light-transmitting layer 154. In the embodiment, the top surface 108a of the optical hardening layer 108 may be a visual surface, so that consumers may oversee the visual effect of the molded film 100E from the top surface 108a of the optical hardening layer 108. Further, in addition to the coating method, the optical hardening layer 108 may also be formed by using a laminating method, an embossing method, a 3D printing method or a jet printing method.

Moreover, the second composite layer structure 160 may be disposed on the second surface 102b of the substrate 102. Specifically, the second composite layer structure 160 may include the anti-impact adhesive layer 118 and the fourth decoration layer 146. The fourth decoration layer 146 may be in contact with the second surface 102b of the substrate 102, and the anti-impact adhesive layer 118 may be disposed under the fourth decoration layer 146, so that the fourth decoration layer 146 is sandwiched between the second surface 102b of the substrate 102 and the anti-impact adhesive layer 118. In the embodiment, the fourth decoration layer 146 may be formed of the second coating, which may be formed on the second surface 102b of the substrate 102 by a physical vapor deposition method (e.g., an evaporation method, a sputtering method, and the like), an electroplating method, and the like. For example, the light-transmitting layer 154 may be a semi-transparent black layer, and the fourth decoration layer 146 may have a vapor-deposited metal layer with a transparency of 25%, so that the molded film 100E exhibits a black metallic color with a transparency of 25%. Further, in addition to the coating method, the anti-impact adhesive layer 118 may also be formed by using a laminating method, an embossing method, a 3D printing method or a jet printing method.

Note that the decorated molding article 50 further includes the groove 105 formed in the first composite layer structure 150, and a protective layer 512 may be filled into the groove 105 by using a 3D printing technology or a jet printing technology. The material and forming method of the protective layer 512 are the same as those of the protective layers 112A and 112B described above, and will not be repeated here. In the present embodiment, the protective layer 512 may extend downward from the top surface 108a of the optical hardening layer 108 into the light-transmitting layer 154. The bottom surface 160b of the second composite layer structure 160 may be in contact with the outer surface 200a of the workpiece 200, so as to be attached onto the outer surface 200a of the workpiece 200 through the anti-impact adhesive layer 118.

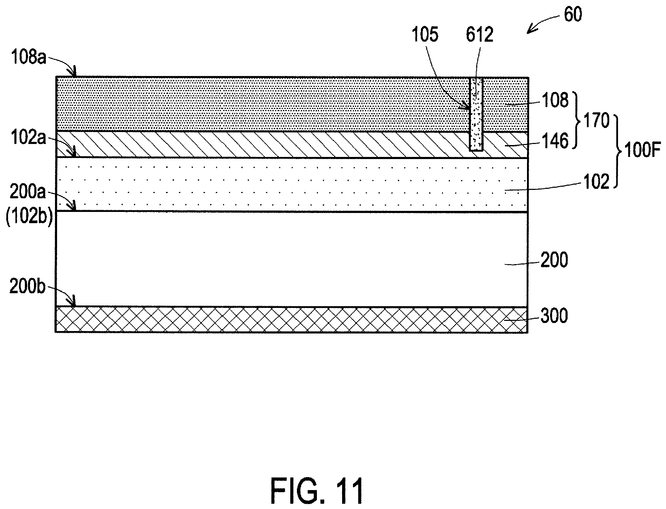

FIG. 11 is a schematic cross-sectional view of a decorated molding article according to a sixth embodiment of the disclosure.

Referring to FIG. 11, a decorated molding article 60 of the sixth embodiment may include the workpiece 200 and a molded film 100F. The molded film 100F may be disposed on the outer surface 200a of the workpiece 200, and the light source 300 may be disposed on the inner surface 200b of the workpiece 200. Specifically, the molded film 100F may include the substrate 102 and a composite layer structure 170. The substrate 102 has the first surface 102a and the second surface 102b opposite to each other. The composite layer structure 170 may be disposed on the first surface 102a of the substrate 102. The composite layer structure 170 may include the fourth decoration layer 146 and the optical hardening layer 108. The fourth decoration layer 146 may be in contact with the first surface 102a of the substrate 102, and the optical hardening layer 108 is disposed on the fourth decoration layer 146. In the embodiment, the top surface 108a of the optical hardening layer 108 may be a visual surface, so that consumers may oversee the visual effect of the molded film 100F from the top surface 108a of the optical hardening layer 108. In the embodiment, the fourth decoration layer 146 may be formed of the second coating, which may be formed on the first surface 102a of the substrate 102 by a physical vapor deposition method (e.g., an evaporation method, a sputtering method, and the like), an electroplating method, and the like. The optical hardening layer 108 may have a protective effect to prevent the fourth decoration layer 146 from being scratched or damaged. Further, in addition to the coating method, the optical hardening layer 108 may also be formed by using a laminating method, an embossing method, a 3D printing method or a jet printing method.

Note that a decorated molding article 60 further includes the groove 105 formed in the composite layer structure 170, and a protective layer 612 may be filled into the groove 105 by using a 3D printing technology or a jet printing technology. The material and forming method of the protective layer 612 are the same as those of the protective layers 112A and 112B described above, and will not be repeated here. In the present embodiment, the protective layer 512 may extend downward from the top surface 108a of the optical hardening layer 108 into the fourth decoration layer 146.

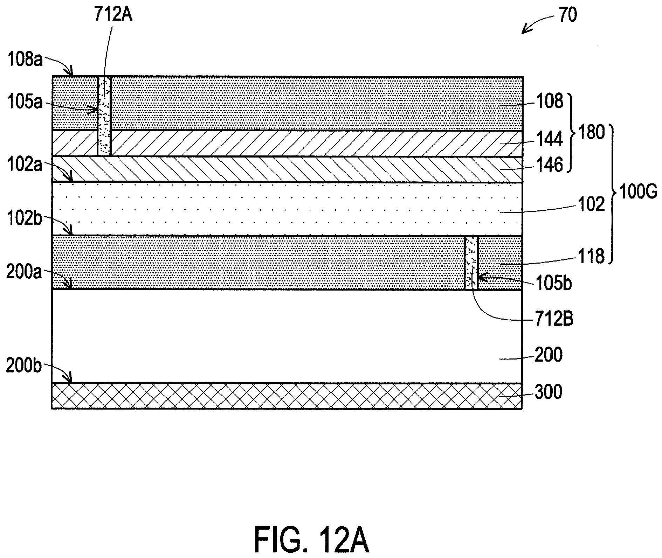

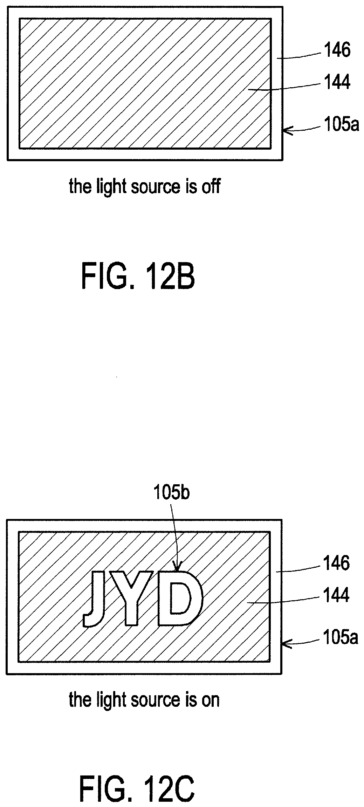

FIG. 12A is a schematic cross-sectional view of a decorated molding article according to a seventh embodiment of the disclosure. FIG. 12B and FIG. 12C are schematic top views of the structure of FIG. 12A when the light source is off and when the light source is on, respectively.

Referring to FIG. 12A, a decorated molding article 70 of the seventh embodiment may include the workpiece 200 and a molded film 100G. The molded film 100G may be disposed on the outer surface 200a of the workpiece 200, and the light source 300 may be disposed on the inner surface 200b of the workpiece 200. Specifically, the molded film 100G may include the substrate 102, a composite layer structure 180, and the anti-impact adhesive layer 118. The substrate 102 has the first surface 102a and a second surface 102b opposite to each other. The composite layer structure 180 may be disposed on the first surface 102a of the substrate 102. The composite layer structure 180 may include the third decoration layer 144, the fourth decoration layer 146, and the optical hardening layer 108. The fourth decoration layer 146 may be in contact with the first surface 102a of the substrate 102. The optical hardening layer 108 may be disposed on the fourth decoration layer 146. The third decoration layer 144 may be disposed between the fourth decoration layer 146 and the optical hardening layer 108. In the embodiment, the top surface 108a of the optical hardening layer 108 may be a visual surface, so that consumers may oversee the visual effect of the molded film 100G from the top surface 108a of the optical hardening layer 108. In the embodiment, the third decoration layer 144 may be formed of the first coating, which may be printed in a single time or multiple times to present different decorative patterns such as wood grain and geometric patterns. The fourth decoration layer 146 may be formed of the second coating, which may be formed on the first surface 102a of the substrate 102 by a physical vapor deposition method (e.g., an evaporation method, a sputtering method, and the like), an electroplating method, or the like. The optical hardening layer 108 may have a protective effect to prevent the third decoration layer 144 from being scratched or damaged. On the other hand, the anti-impact adhesive layer 118 may be disposed on the second surface 102b of the substrate 102 and in contact with the second surface 102b of the substrate 102. In the embodiment, the molded film 100G may be attached to the outer surface 200a of the workpiece 200 through the anti-impact adhesive layer 118. Further, in addition to the coating method, the optical hardening layer 108 and may he anti-impact adhesive layer 118 also be formed by using a laminating method, an embossing method, a 3D printing method or a jet printing method.

Note that the decorated molding article 70 further includes a first groove 105a and a second groove 105b, and a first protective layer 712A may be filled into the first groove 105a and a second protective layer 712B may be filled into the second groove 105b by using a 3D printing technology or a jet printing technology. In one embodiment, the first protective layer 712A and the second protective layer 712B have different material compositions. Specifically, the material of the first protective layer 712A may be similar to the said third coating, and the second protective layer 712B may be similar to the said fourth coating. The content of the protective material in the first protective layer 712A may be higher than that of the protective material in the second protective layer 712B, and the content of the bonding material in the second protective layer 712B may be higher than that of the bonding material in the first protective layer 712A. It can be seen from FIG. 12A that the first protective layer 712A is formed in the composite layer structure 180. That is, the first protective layer 712A extends downward from the top surface 108a of the optical hardening layer 108 into the third decoration layer 144. The second protective layer 712B is formed in the anti-impact adhesive layer 118. That is, the first protective layer 712A and the second protective layer 712B are respectively formed on opposite sides (i.e., the upper side and the lower side) of the decorated molding article 70 of the embodiment, so as to increase different light transmission areas, thereby improving the visual perception of consumers.

In the embodiment, as shown in FIG. 12B and FIG. 12C, the decorated molding article 70 may emit light of various colors through the first protective layer 712A and the second protective layer 712B in the grooves 105a and 105b. For example, the light source 300 may be blue light, the protective layers 712A, 712B are white light-transmitting materials, the third decoration layer 144 may be a wood grain layer, and the fourth decoration layer 146 may be a vapor-deposited metal layer with a transparency of 50%. When the light source 300 is off, the consumer may see the wood grain layer with metal edges from the visual surface 108a through the first protective layer 712A in the first groove 105a as shown in FIG. 12B. On the other hand, when the light source 300 is on, the consumer may see the wood grain layer with metal edges and blue lettering from the visual surface 108a through the first protective layer 712A in the first groove 105a and the second protective layer 712B in the second groove 105b. In addition, the protective layers 712A, 712B may also have various colors to combine with the light source 300 to produce different color mixing effects.

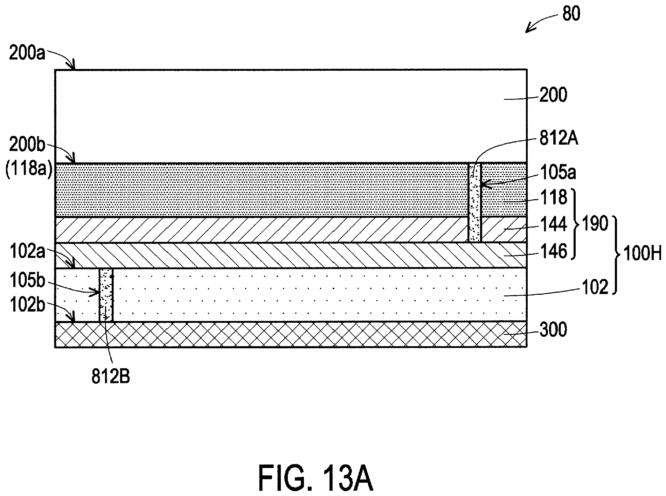

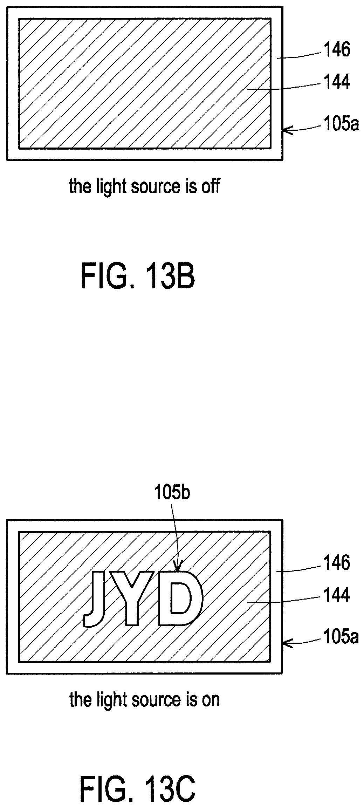

FIG. 13A is a schematic cross-sectional view of a decorated molding article according to an eighth embodiment of the disclosure. FIG. 13B and FIG. 13C are schematic top views of the structure of FIG. 13A when the light source is off and when the light source is on, respectively.

Referring to FIG. 13A, a decorated molding article 80 of the eighth embodiment may include the workpiece 200 and a molded film 100H. The molded film 100H may be disposed on the inner surface 200b of the workpiece 200, and the light source 300 may be disposed under the molded film 100H, so that the molded film 100H is sandwiched between the workpiece 200 and the light source 300. Specifically, the molded film 100H may include the substrate 102 and a composite layer structure 190. The substrate 102 has the first surface 102a and the second surface 102b opposite to each other. The composite layer structure 190 may be disposed on the first surface 102a of the substrate 102. The composite layer structure 190 may include the third decoration layer 144, the fourth decoration layer 146, and the anti-impact adhesive layer 118. The fourth decoration layer 146 may be in contact with the first surface 102a of the substrate 102. The anti-impact adhesive layer 118 may be disposed on the fourth decoration layer 146. The third decoration layer 144 may be disposed between the fourth decoration layer 146 and the anti-impact adhesive layer 118. In the embodiment, the outer surface 200a of the workpiece 200 may be a visual surface, so that consumers may oversee the visual effect of the molded film 100H from the outer surface 200a of the workpiece 200. In the embodiment, the third decoration layer 144 may be formed of the first coating, which may be printed in a single time or multiple times to present different decorative patterns such as wood grain and geometric patterns. The fourth decoration layer 146 may be formed of the second coating, which may be formed on the first surface 102a of the substrate 102 by a physical vapor deposition method (e.g., an evaporation method, a sputtering method, and the like), an electroplating method, or the like. The anti-impact adhesive layer 118 may have an adhesive function, so that the molded film 100H may be attached to the inner surface 200b of the workpiece 200 through the anti-impact adhesive layer 118. Further, in addition to the coating method, the anti-impact adhesive layer 118 may also be formed by using a laminating method, an embossing method, a 3D printing method or a jet printing method.

Note that the decorated molding article 80 further includes the first groove 105a and the second groove 105b, and a first protective layer 812A may be filled into the first groove 105a and a second protective layer 812B may be filled into the second groove 105b by using a 3D printing technology or a jet printing technology. In one embodiment, the first protective layer 812A and the second protective layer 812B have the same material composition. Specifically, the material of the first protective layer 812A and the second protective layer 812B may be similar to the said fourth coating for forming the anti-impact adhesive layer, and will not be repeated here. It can be seen from FIG. 13A that the first protective layer 812A is formed in the composite layer structure 190. That is, the first protective layer 812A extends downward from the top surface 118a of the anti-impact adhesive layer 118 into the third decoration layer 144. The second protective layer 812B is formed in the substrate 102 to extend from the first surface 102a to the second surface 102b. That is, the decorated molding article 80 of the embodiment may be formed with grooves on opposite sides (i.e., the upper side and the lower side) to increase different light transmission areas, thereby improving the visual perception of consumers.

In the embodiment, as shown in FIG. 13B and FIG. 13C, the decorated molding article 80 may emit light of various colors through the first protective layer 812A and the second protective layer 812B in the grooves 105a and 105b. For example, the light source 300 may be blue light, the protective layers 812A, 812B are white light-transmitting materials, the third decoration layer 144 may be a wood grain layer, and the fourth decoration layer 146 may be a vapor-deposited metal layer with a transparency of 50%. When the light source 300 is off, the consumer may see the wood grain layer with metal edges from the visual surface 200a through the first protective layer 812A in the first groove 105a as shown in FIG. 13B. On the other hand, when the light source 300 is on, the consumer may see the wood grain layer with metal edges and blue lettering from the visual surface 200a through the first protective layer 812A in the first groove 105a and the second protective layer 812B in the second groove 105b. In addition, the protective layers 812A, 812B may also have various colors to combine with the light source 300 to produce different color mixing effects.

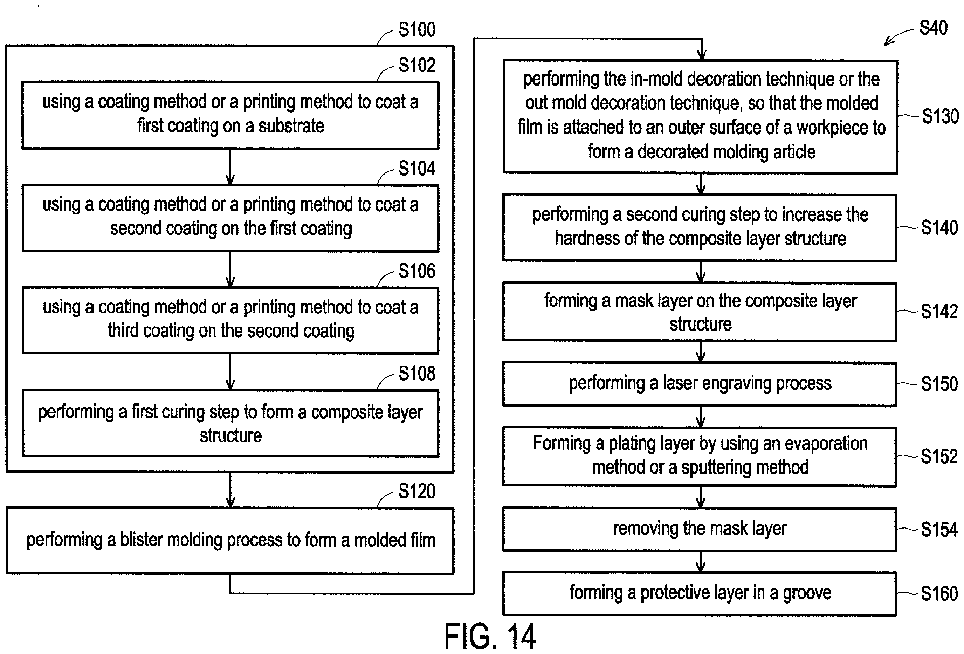

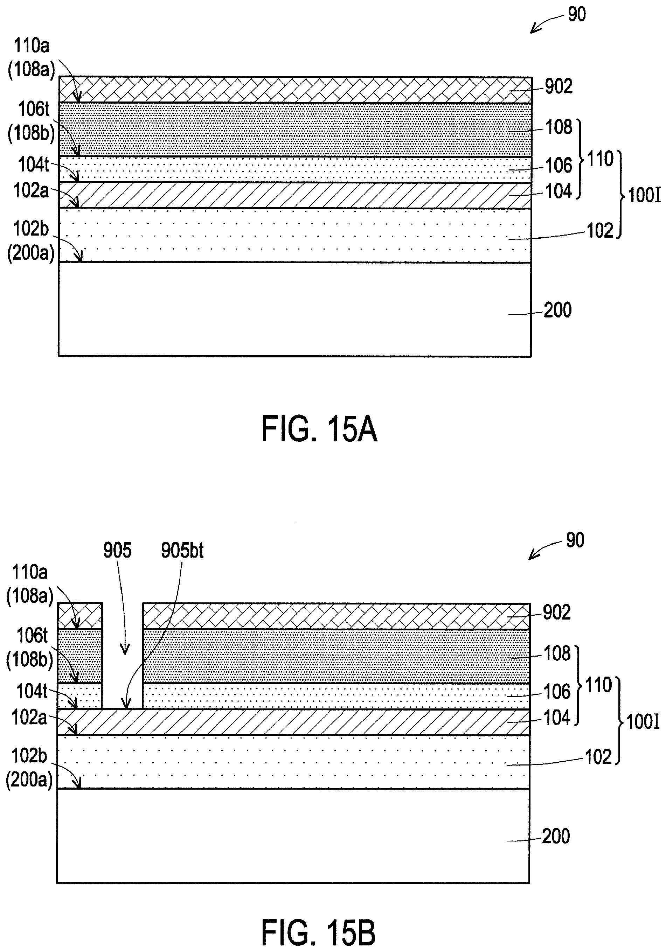

FIG. 14 is a flow chart illustrating a method of fabricating a decorated molding article according to a ninth embodiment of the disclosure. FIG. 15A to FIG. 15E are schematic cross-sectional views of fabricating a decorated molding article according to a ninth embodiment of the disclosure.

Referring to FIG. 14 and 15A, the ninth embodiment of the disclosure provides the fabricating method S40 of a decorated molding article 90 as follows. First, step S100 is performed to form the composite layer structure 110 (as shown in FIG. 15A). Step S100 has been described in detail in the above paragraphs, and will not be repeated here. After the composite layer structure 110 is formed, step S120 is performed. A blister molding process is performed to form a molded film 1001.

Then, proceed to step S130. The in-mold decoration technique or the out mold decoration technique are performed, so that the molded film 1001 is attached to an outer surface 200a of a workpiece 200 to form the decorated molding article 90 as shown in FIG. 15A. The in-mold decoration technique and the out mold decoration technique have been described in detail in the above paragraphs, and will not be repeated here.

Referring back to FIG. 14, after the decorated molding article 90 is formed, proceed to step S140. A second curing step is performed to increase the hardness of the composite layer structure 110.

Next, proceed to step S142. A mask layer 902 is formed on the composite layer structure 110. In one embodiment, as shown in FIG. 15A, the mask layer 902 covers the top surface 110a of the composite layer structure 110.

Then, proceed to step S150. A laser engraving process is performed to form a groove 905 in the mask layer 902 and the composite layer structure 110. As shown in FIG. 15B, the groove 905 may penetrate through the mask layer 902 and extend downward from the top surface 110a of the composite layer structure 110 until exposing the top surface 104t of the first decoration layer 104. However, the disclosure is not limited thereto, in other embodiments, the groove 905 may also have different depths. That is, the bottom surface 905bt of the groove 905 may be higher than or lower than the top surface 104t of the first decoration layer 104, or the bottom surface 905bt of the groove 905 may be higher than, equal to, or lower than the top surface 106t of the second decoration layer 106. In addition, although FIG. 15B only illustrates a single groove 905, the disclosure is not limited thereto. In alternative embodiments, the decorated molding article 90 may have multiple grooves to form various laser engraved patterns, and thereby improving the visual perception of consumers.

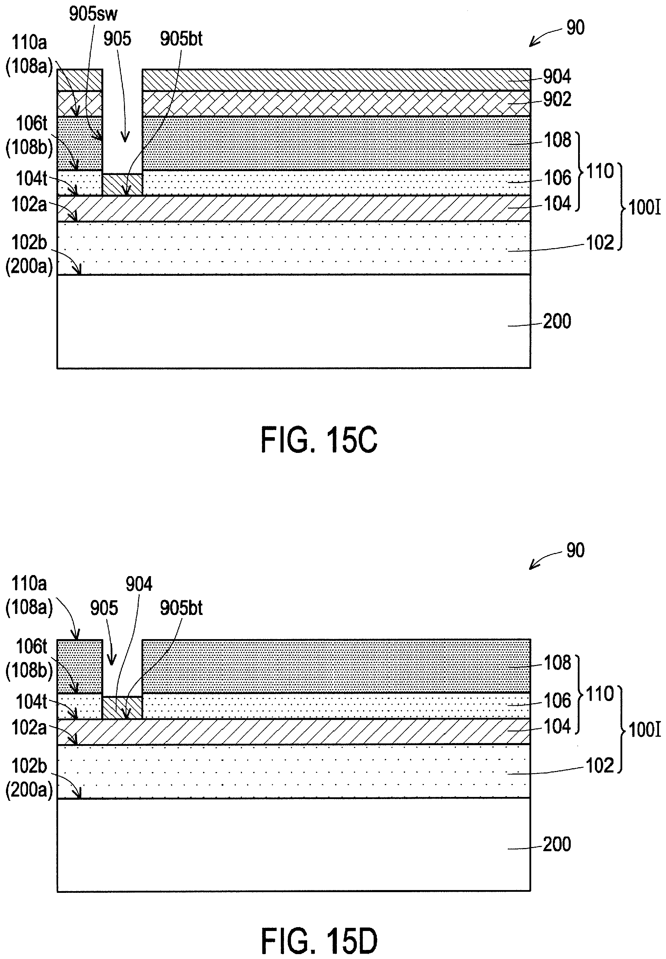

Afterward, proceed to step S152. A plating layer 904 is formed by using an evaporation method or a sputtering method. Specifically, the plating layer 904 may fill in the groove 905 and cover the top surface of the mask layer 902. It should be noted that the plating layer 904 does not fill up the groove 905. That is, the plating layer 904 overlays the bottom surface 905bt of the groove 905, while exposes a portion of the sidewall 905sw of the groove 905, as shown in FIG. 15C. In one embodiment, the material of the plating layer 904 includes a metal material. In the present embodiment, the plating layer 904 may be a sputtered metal layer.

Then, proceed to step S154. The mask layer 902 is removed. Specifically, the mask layer 902 is removed, while the plating layer 904 over the mask layer 902 may also be removed. That is, after removing the mask layer 902, the remaining plating layer 904 is only disposed in the groove 905, as shown in FIG. 15D.

Afterward, proceed to step S160. A protective layer 912 is formed in the groove 905, so that the protective layer 912 covers and seals the plating layer 904. Specifically, the protective layer 912 may be formed by a 3D printing technology. The material and forming method of the protective layer 912 are the same as those of the protective layers 112A and 112B described above, and will not be repeated here. It should be noted that, in the present embodiment, the protective layer 912 may partially protect the laser-engraved texture, that is, the plating layer 904 and the second decoration layer 106 exposed by the groove 905 can be protected from being damaged, so as to further enhance the protection effect of the composite layer structure 110 and increase the life time.

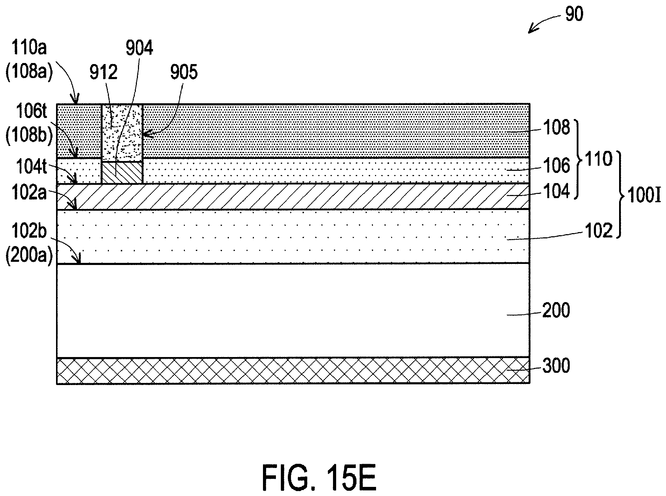

In addition, although the protective layer 912 shown in FIG. 15E is only located in the groove 905, the disclosure is not limited thereto. In other embodiments, a protective layer (not shown) may also extend from the groove 905 and cover the top surface 108a of the optical hardening layer 108. The protective layer may adjust the range or area of the extension portion according to design requirements.

Referring back to FIG. 15E, the decorated molding article 90 may be disposed on the light source 300 to emit light of various colors through the protective layer 912 in the groove 905. For example, the light source 300 may be blue light, the plating layer 904 is a sputtered silver layer with a transparency of 50%, the protective layer 912 is a white light-transmitting material, and the second decoration layer 106 may be a wood grain layer. When the light source 300 is off, the consumer can see a laser engraved pattern with the metal silver color on the wood grain layer from the visual surface 110a. On the other hand, when the light source 300 is on, the consumer can see a laser engraved pattern with the silver-blue metallic effect from the visual surface 110a through the protective layer 912 in the groove 905.

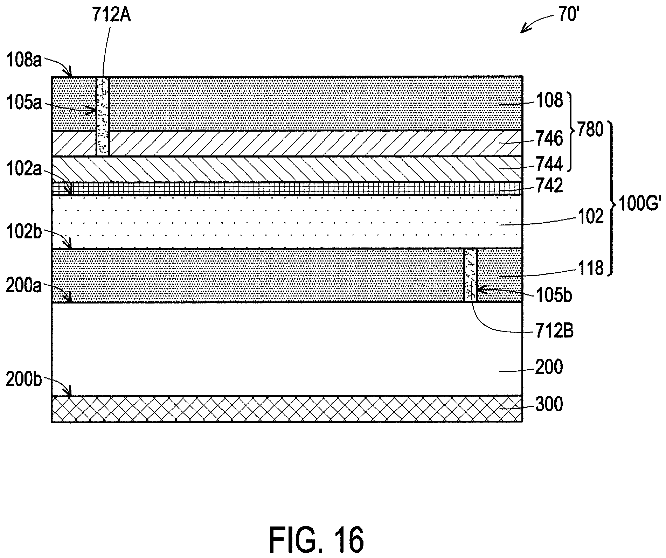

FIG. 16 is a schematic cross-sectional view of a decorated molding article according to alternative embodiments of the disclosure.

Referring to FIG. 16, a decorated molding article 70' may include the workpiece 200 and a molded film 100G'. The molded film 100G' may be disposed on the outer surface 200a of the workpiece 200, and the light source 300 may be disposed on the inner surface 200b of the workpiece 200. Specifically, the molded film 100G' may include the substrate 102, a composite layer structure 780, and the anti-impact adhesive layer 118. Basically, the decorated molding article 70' of FIG. 16 is similar to the decorated molding article 70 of FIG. 12A, the similar components have been described in the above embodiments, and thus the details are omitted herein. The main difference between the above two lies in that the composite layer structure 780 may include a non-woven fabric layer 744, a real wood veneer layer 746, and the optical hardening layer 108. The non-woven fabric layer 744 may be adhered on the first surface 102a of the substrate 102 via an adhesive layer 742. The real wood veneer layer 746 may be disposed between the non-woven fabric layer 744 and the optical hardening layer 108. In the embodiment, the top surface 108a of the optical hardening layer 108 may be a visual surface, so that consumers may oversee the visual effect of the molded film 100G' from the top surface 108a of the optical hardening layer 108.

Note that the decorated molding article 70' also includes a first groove 105a and a second groove 105b, and a first protective layer 712A may be filled into the first groove 105a and a second protective layer 712B may be filled into the second groove 105b by using a 3D printing technology or a jet printing technology. In one embodiment, the first protective layer 712A and the second protective layer 712B have different material compositions. It can be seen from FIG. 16 that the first protective layer 712A is formed in the composite layer structure 780. That is, the first protective layer 712A extends downward from the top surface 108a of the optical hardening layer 108 into the real wood veneer layer 746. The second protective layer 712B is formed in the anti-impact adhesive layer 118. That is, the first protective layer 712A and the second protective layer 712B are respectively formed on opposite sides (i.e., the upper side and the lower side) of the decorated molding article 70' of the embodiment, so as to increase different light transmission areas, thereby improving the visual perception of consumers. In this case, the decorated molding article 70' may emit light of various colors through the first protective layer 712A and the second protective layer 712B in the grooves 105a and 105b.

The process of performing steps S142 to S160 to partially form a plating layer and a protective layer in the groove may also be applied to any one of the above-mentioned decorated molding articles 20, 30, 40, 50, 60, 70, 70', 80. For example, after step S142 to step S160 are performed to form the plating layer and the protective layer in the groove, step S170 is performed, that is, the in-mold decoration technology or the out-of-mold decoration technology is performed, so that the molded film is attached onto the inner surface of the workpiece. In such embodiment, since the protective layer will be attached onto the inner surface of the workpiece, the material of the protective layer is similar to the fourth coating for forming the anti-impact adhesive layer. That is, the process of partially forming the plating layer and the protective layer in the groove may be applied to the structures of various decorated molding articles according to product requirements.

Moreover, any one of the decorated molding articles 10, 20, 30, 40, 50, 60, 70, 80, and 90 may be applied to vehicle lights. That is, any one of the decorated molding articles 10, 20, 30, 40, 50, 60, 70, 80, and 90 may be attached to the plastic shell of the car lamp to present a variety of different color effects by a laser engraved pattern (e.g., the groove 105). For example, in the disclosure, multiple grooves 105 may correspond to lamp bodies of different colors, so that the brake light shows red light through the first groove, the left turn lamp shows yellow light through the second groove, and the headlight shows white light through the third groove.

While disclosed method S40 of FIG. 14 is illustrated and described herein as a series of acts or events, it will be appreciated that the illustrated ordering of such acts or events are not to be interpreted in a limiting sense. That is, some acts may occur in different orders and/or concurrently with other acts or events apart from those illustrated and/or described herein. For example, the forming the mask layer, the laser engraving process, and the 3D printing steps are all protected by the disclosure regardless of the process sequence. In addition, not all illustrated acts may be required to implement one or more aspects or embodiments of the description herein. Further, one or more of the acts depicted herein may be carried out in one or more separate acts and/or phases.

In summary, in the disclosure, the all-in-one coating is formed on the substrate and the curing step is performed to form a composite layer structure with protective effects, color effects, and bonding effects. This composite layer structure may form a molded film with better physical properties (e.g., higher hardness, better protection effect, and the like) after the blister molding process. Therefore, the molded film of the embodiments may be applied to a laser engraving process to form a variety of light-transmitting decorated molding articles. In addition, in the disclosure, the protective layer is further partially formed in the groove to protect the laser-engraved texture from damage, thereby improving the protective effect of the composite layer structure and increasing the life time. Moreover, in the disclosure, the laser engraving process is performed after the blister molding process. Therefore, the disclosure may solve the alignment problem of the conventional technology, thereby improving the yield rate and reducing the fabricating cost.

On the other hand, compared to the ink layer or printing layer in the conventional INS that needs to be matched with the substrate bonding process, a plurality of stacked decoration layers in the present embodiment not only provide a variety of color effects, but also have the protective effect and the bonding effect, while no additional bonding process is required. Further, compared with the conventional IML technology, which needs to form additional 3-10 adhesive layers to be attached to the workpiece, the present embodiment does not need to form any additional adhesive layer. That is, the disclosure can effectively simplify the manufacturing steps of the composite layer structure, and provide the composite layer structure with better protective effect and the bonding effect. Furthermore, compared with the conventional spraying technology, INS technology or IML technology, the manufacturing steps of the decorated molding article of the disclosure are more simplified, thereby effectively reducing the manufacturing cost.

## Claims

1. A method of fabricating a decorated molding article, comprising:
providing a coating, wherein the coating at least comprises a protective material, an ink material, and a bonding material uniformly mixed together;
forming the coating on a substrate (102) by using a coating method or a printing method (S102);
performing a first curing step (S108) to form a composite layer structure (110), wherein the composite layer structure (110) at least comprises an optical hardening layer (108) disposed on the substrate (102);
performing a blister molding process (S120) to form a molded film (100A);
performing a second curing step (S140) to increase a hardness of the molded film (100A);
performing a laser engraving process (S150) to form a groove (105);
forming a protective layer (112A, 112B) in the groove (105); and
attaching the molded film (100A) onto a surface of a workpiece (200) to form a decorated molding article (10).

2. The method of fabricating the decorated molding article according to claim 1, wherein the protective material comprises polymethyl methacrylate (PMMA), aliphatic urethane diacrylate, epoxy acrylate (EA), polyester polyol, or a combination thereof; the ink material comprises polyurethane (PU); and the bonding material comprises thermoplastic polyurethane (TPU), aromatic urethane diacrylate, or a combination thereof.

3. The method of fabricating the decorated molding article according to claim 1, wherein the protective layer (112A, 112B) is formed by using a 3D printing method or a jet printing method.

4. The method of fabricating the decorated molding article according to claim 1, wherein the attaching the molded film (100A) to the surface of the workpiece (200) comprises:
after performing the blister molding process (S120), performing in-mold decoration or out mold decoration technique to the molded film (S130), so that the molded film (100A) is attached to an outer surface (200a) of the workpiece (200) to form the decorated molding article (10).

5. The method of fabricating the decorated molding article according to claim 1, wherein the attaching the molded film (100B) to the surface of the workpiece (200) comprises:
after performing the blister molding process (S150), performing in-mold decoration or out mold decoration technique to the molded film (S170), so that the molded film (100B) is attached to an inner surface (200b) of the workpiece (200) to form the decorated molding article (20).

6. A method of fabricating a decorated molding article, comprising:
providing a substrate (102) with a first surface and a second surface opposite to each other;
forming a second coating on the second surface of the substrate by using a coating method or a printing method (S101);
forming the first coating on the second coating by using a coating method or a printing method (S103);
performing a first curing step (S108) to form a composite layer structure (130), wherein the composite layer structure (130) at least comprises:
the substrate (102);
a first decoration layer (104) disposed on the second surface (102b) of the substrate (102); and
a second decoration layer (106) disposed between the second surface (102b) of the substrate (102) and the first decoration layer (104);
performing a blister molding process (S120) to form a molded film (100C);
performing a laser engraving process (S150) to form a groove (105);
forming a protective layer (312) in the groove (105); and
attaching the molded film (100C) onto a surface of a workpiece (200) to form a decorated molding article (30).

7. The method of fabricating the decorated molding article according to claim 6, wherein the first coating and the second coating each comprise a protective material, an ink material, and a bonding material uniformly mixed together.

8. The method of fabricating the decorated molding article according to claim 6, wherein the protective layer (312) is formed by using a 3D printing method or a jet printing method.

9. A method of fabricating a decorated molding article, comprising:
providing a coating, wherein the coating at least comprises a protective material, an ink material, and a bonding material uniformly mixed together;
forming the coating on a substrate by using a coating method or a printing method (S102);
performing a first curing step (S108) to form a composite layer structure (110);
performing a blister molding process (S120) to form a molded film (100I);
performing a second curing step (S140) to increase a hardness of the molded film (100I);
forming a mask layer (902) on the composite layer structure (110);
performing a laser engraving process (S150) to form a groove (905) in the mask layer (902) and the composite layer structure (110);
forming a plating layer (904) on the mask layer (902) by using an evaporation method or a sputtering method, wherein a portion of the plating layer (904) is filled into the groove (905);
removing the mask layer (902) and the plating layer (904) thereon (S154);
forming a protective layer (912) in the groove (905), wherein the protective layer (912) covers the plating layer (904); and
attaching the molded film (1001) onto a surface of a workpiece (200) to form a decorated molding article (90).

10. The method of fabricating the decorated molding article according to claim 9, wherein the protective layer (912) is formed by using a 3D printing method or a jet printing method.
